# EUROPEAN PATENT APPLICATION

(11) **EP 0 557 132 A2**
(43) Date of publication of application: **25.08.1993**
(21) Application number: 93301255.1
(22) Date of filing: 19.02.1993
(51) Int. Cl.: B62J 6/00

(54) **A cycle lighting system**

(30) Priority: 20.02.1992 GB 9203686
(71) Applicant: Sibley, Alan, Uxbridge, Middlesex (GB)
(72) Inventor: Sibley, Alan, Uxbridge, Middlesex (GB)
(74) Representative: Goodanew, Martin Eric

(57) **Abstract**

A cycle lighting system includes a fluorescent tube 13, of substantially triangular configuration, attached to the V-frame 1,3 of a cycle. A battery 21 and inverter 19 arranged together to power the tube 13 are carried in a pouch 23 fastened to the underside of the cycle seat 25.

## Description

This invention relates to a cycle lighting system particularly, but not exclusively, for use with bicycles.

It is well known that the riding of bicycles at night, and at other times of poor visibility, is very dangerous as it is very difficult for other road users to see either the bicycle or the rider of the bicycle. Whilst there is a legal requirement for bicycles to carry front and rear lights, these are not very bright, and the bicycle and the rider of the bicycle are not readily apparent to, for example, the driver of a car who may not see the bicycle and rider until it is too late to take evasive action.

It is an object of the present invention to make a cycle and its rider more readily visible to other road users than has hitherto been possible.

According to a first aspect of the invention there is provided a cycle having an electrically powered lighting system fitted to a framework of the cycle for illuminating at least part of the cycle and its rider.

Preferably, the electrically powered lighting system includes a light source mounted on an external surface of the framework. The light source may be used to illuminate an external surface of the framework or alternatively at least part of the framework is made translucent and the light source is mounted to illuminate an interior surface of the framework such that light passes through the framework. The framework may be made of tubes within which the light source is located and through the side walls of which the light is transmitted.

A point light source may be used such as a tungsten filament bulb, although, preferably, the light source is elongate and extends along at least part of the framework. An elongate light source is also preferred where the light source is mounted on an external surface of the framework.

The light source may comprise a filament lamp, light emitting diodes or a series of such lamps or diodes.

The preferred light source is an electrical discharge device because of its high brightness for low current drain. Such devices include gas filled tubes which may be coated with phosphors to emit conspicuous colour or solid state devices such as electroluminescent panels.

According to a second aspect of the invention there is provided a cycle lighting system comprising an electrical-discharge lamp adapted to be connected to part of the framework of a cycle, a means for storing electrical energy and means for converting the electrical energy supplied by the means for storing the electrical energy to a form suitable for operating the electrical-discharge lamp.

The electrical-discharge lamp is suitably a fluorescent lamp.

The electrical-discharge lamp suitably comprises a tube configured to fit on part of the framework of the cycle.

The tube may be of substantially triangular configuration, designed to fit on the V-frame of the cycle. The V-frame is that part of the frame which extends between a seat, handle-bars and bottom bracket of a cycle.

The electrical-discharge lamp is suitably attached to the framework of the cycle by at least one clip member designed so that the electrical-discharge lamp may be removed from the frame member.

The means for storing electrical energy is suitably a battery. The battery is preferably a rechargeable battery.

The means for converting the electrical energy is suitably an inverter unit. The inverter unit and means for storing electrical energy may be carried by a pouch member connectable to the underside of the seat of the cycle.

A cycle and a cycle lighting system in accordance with both aspects of the invention will now be described, by way of example only, with reference to the accompanying schematic drawing.

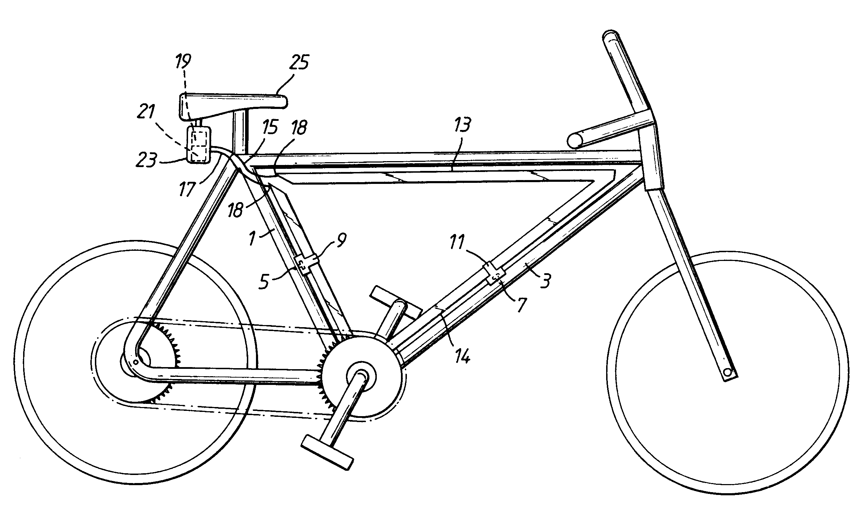

Referring to the drawing, a bicycle, in this example a so-called 'mountain bike', of conventional form is shown. Attached to the two arms 1,3 of the V-frame of the bicycle by respective bolts 5,7 are two generally horse-shoe shaped spring clips 9,11 of plastics material. The clips 9,11 are designed to hold a fluorescent light tube 13 of substantially triangular form, the tube 13 being a push fit in the clips 9,11. The tube 13 includes a starter circuit (not shown) of conventional form. The tube 13 is filled with argon or another suitable gas in conventional manner, the tube 13 being encapsulated in a plastics sheath 14. The sheath 14 is suitably in the form of a translucent "shrink wrap" film.

The terminals of the tube 13 are connected via detachable leads 15,17 to a small inverter unit 19, the leads and terminals being electrically insulated by rubber end caps 18. The inverter unit 19 is of substantially rectangular solid form, the inverter having dimensions of approximately 10cms x 6cms x 2cms. The inverter 19 is designed to operate on an input voltage of between 6 and 12 volts DC, drawing an input current of 600 milliamps from a rechargeable 9 volt battery 21. The inverter unit 19 is operable to produce an output voltage which will be dependent on the load connected to the inverter unit, but will typically be 1000 volts at 30KHz, with an output current of 6 milliamps.

The inverter unit 19 and battery 21 are contained within a P.V.C. pouch 23. The pouch 23 includes straps having snap-fastenings for removably attaching the pouch 23 to the undemeath of the seat 25 of the bicycle.

Thus in use of the bicycle lighting system, the inverter unit 19 powered by the battery 21 provides the correct electrical current to the terminals of the tube 13 to initiate and sustain a discharge in the tube. The tube 13 thus provides sufficient light to illuminate clearly the bicycle together with the rider of the bicycle. The encapsulation of the tube 13 in a sheath of plastics material ensures the safety of the rider in the event of breakage of the tube 13.

In the particular embodiment of the invention described herebefore, the leads 15,17 are designed to be readily detachable from the inverter unit 19, thus enabling the tube 13 to be switched on and off. It may be expedient however to incorporate a switch which is readily accessible to the rider of the bicycle, to facilitate the switching on and off of the tube 13.

It will be seen that by use of a lighting system in accordance with the invention, the bicycle and rider will be much more clearly visible than would be the case of bicycles having a conventional lighting system. This, thus, greatly enhances the safety of the rider.

It will be appreciated that tubes of different configurations to the tube 13 may be incorporated at different positions on the bicycle, for example, straight tubes may be attached to the front or rear wheel support brackets. Furthermore, whilst it is found that the two spring clips 9,11 securely attach the tube 13 to the bicycle framework, one or more than two clips may be used. Alternatives to spring clips may be used, for example Velcro (TM) fastenings, particularly where the tube is attached to the wheel support brackets.

It will also be appreciated that whilst in the particular embodiment described herebefore, additional front and rear lamps will be required to fulfill present day legal requirements. These may also take the form of tubes powered by the inverter 19 and battery 21 with suitable filters being provided such that light of the required colours is emitted. Fluorescent tubes may be used having phosphor coatings to produce the appropriate colours.

It will also be appreciated that it is particularly convenient for the tube 13 to be removably connected to the framework 1,3 so as to enable the tube to be replaced when necessary, and also for reasons of security. The invention also embraces, however, cycle lighting systems in which the light source is actually incorporated in the cycle framework, the framework thus being made of at least partially translucent material. The material itself may be coloured in high visibility colours such as orange or yellow or clear.

It will be appreciated that it may, in some circumstances be appropriate to use an electrical-discharge lamp which does not carry a fluorescent coating. Generally, however, the lamp will be of the form of a fluorescent tube, the gas filling and fluorescent material being chosen such that light of an appropriate colour is generated.

## Claims

1. A cycle having an electrically powered lighting system (13,19,21) fitted to a framework (1,3) of the cycle for illuminating at least part of the cycle and its rider.

2. A cycle as claimed in claim 1 wherein a light source (13) is mounted on an external surface of the framework (1,3).

3. A cycle as claimed in claim 2 wherein the light source (13) is elongate and extends along at least part of the framework (1,3).

4. A cycle as claimed in claim 2 or claim 3 wherein the light source is encased in a plastics sheath (14).

5. A cycle as claimed in claim 1 wherein at least part of the framework (1,3) is translucent and a light source is mounted to illuminate an interior surface of the framework such that light passes through the framework.

6. A cycle as claimed in any one of claims 2 to 5 wherein the light source (13) comprises an electrical discharge device.

7. A cycle as claimed in any preceding claim wherein the cycle is a bicycle and the lighting system (13) is carried by a V-frame (1,3) of the bicycle.

8. A cycle as claimed in claim 7 when dependent on claim 2 wherein the light source (13) is elongate and extends along three sides of the V-frame (1,3).

9. A cycle lighting system comprising an electrical-discharge lamp (13) adapted to be connected to part of the framework (1,3) of a cycle, a means (21) for storing electrical energy, and means (19) for converting the electrical energy supplied by the means (21) for storing the electrical energy to a form suitable for operating the electrical-discharge lamp (13).

10. A cycle lighting system according to claim 10, in which the electrical-discharge lamp (13) is a fluorescent lamp.

11. A cycle lighting system according to claim 9 or 10 in which the electrical-discharge lamp (13) comprises a tube configured to fit on part of the framework (1,3) of the cycle.

12. A cycle lighting system according to claim 11 in which the tube (13) is of substantially triangular configuration, designed to fit on the V-frame (1,3) of the cycle.

13. A cycle lighting system according to any one of claims 9 to 12 wherein the electrical discharge lamp is encased in a plastics sheath (14).

14. A cycle lighting system according to any one of claims 9 to 13 in which the electrical-discharge lamp (13) is attachable to the framework (1,3) of the cycle by at least one clip member (9,11) designed so that the electrical-discharge lamp may be removed from the framework.

15. A cycle lighting system according to any one of claims 9 to 14 in which the means (21) for storing electrical energy is a battery.

16. A cycle lighting system according to any one of claims 9 to 15 in which the means (19) for converting the electrical energy is an inverter unit.

17. A cycle lighting system according to claim 16 in which the inverter unit (19) and the means (21) for storing electrical energy are carried by a pouch member (23) connectable to the underside of the seat (25) of a cycle.
